(19) Europäisches Patentamt
European Patent Office
Office européen des brevets

(11) **EP 1 886 301 B1**

(12) **EUROPÄISCHE PATENTSCHRIFT**

(45) Veröffentlichungstag und Bekanntmachung des Hinweises auf die Patenterteilung:
**12.11.2008 Patentblatt 2008/46**

(21) Anmeldenummer: 06753865.2

(22) Anmeldetag: **24.05.2006**

(51) Int Cl.:
***G10K 11/168*** (2006.01)    ***B61D 17/18*** (2006.01)
***E04B 1/86*** (2006.01)

(86) Internationale Anmeldenummer:
**PCT/EP2006/004995**

(87) Internationale Veröffentlichungsnummer:
**WO 2006/128632 (07.12.2006 Gazette 2006/49)**

(54) **SANDWICHSTRUKTUR MIT FREQUENZSELEKTIVEM DOPPELWANDVERHALTEN**

SANDWICH STRUCTURE HAVING A FREQUENCY-SELECTIVE DOUBLE-WALL BEHAVIOR

STRUCTURE EN SANDWICH A COMPORTEMENT DE DOUBLE PAROI SELECTIF EN FREQUENCE

(84) Benannte Vertragsstaaten:
**DE FR GB IT SE**

(30) Priorität: **28.05.2005 DE 102005024549**

(43) Veröffentlichungstag der Anmeldung:
**13.02.2008 Patentblatt 2008/07**

(73) Patentinhaber: **Airbus Deutschland GmbH**
**21129 Hamburg (DE)**

(72) Erfinder:
• **THOMAS, Christian**
**22769 Hamburg (DE)**
• **WANDEL, Martin**
**24632 Lentföhrden (DE)**

(74) Vertreter: **Barth, Stephan Manuel**
**Reinhard-Skuhra-Weise & Partner GbR**
**Patentanwälte**
**Friedrichstrasse 31**
**80801 München (DE)**

(56) Entgegenhaltungen:
CA-C- 2 176 374     DE-A1- 3 116 938
DE-A1- 19 509 972     US-A- 5 633 067
US-A1- 2003 057 017

• **PATENT ABSTRACTS OF JAPAN Bd. 015, Nr. 005 (P-1149), 8. Januar 1991 (1991-01-08) & JP 02 253297 A (MATSUSHITA ELECTRIC WORKS LTD), 12. Oktober 1990 (1990-10-12)**

## Beschreibung

Technisches Gebiet

Die Erfindung betrifft eine Sandwichstruktur, umfassend einen Kern sowie beidseitig des Kerns angeordnete Deckschichten.

Stand der Technik

Höhere Anforderungen an den Akustikkomfort für Passagiere in Großraumflugzeugen verlangen bessere akustische Eigenschaften des Kabinenwandaufbaus und somit der Kabinenwandelemente, aus denen die Innenverkleidung der Kabine besteht. Standardmaterial für diese Kabinenwandelemente sind Sandwichstrukturen, wie beispielsweise Sandwichplatten mit einem Kern aus einer Wabenstruktur.

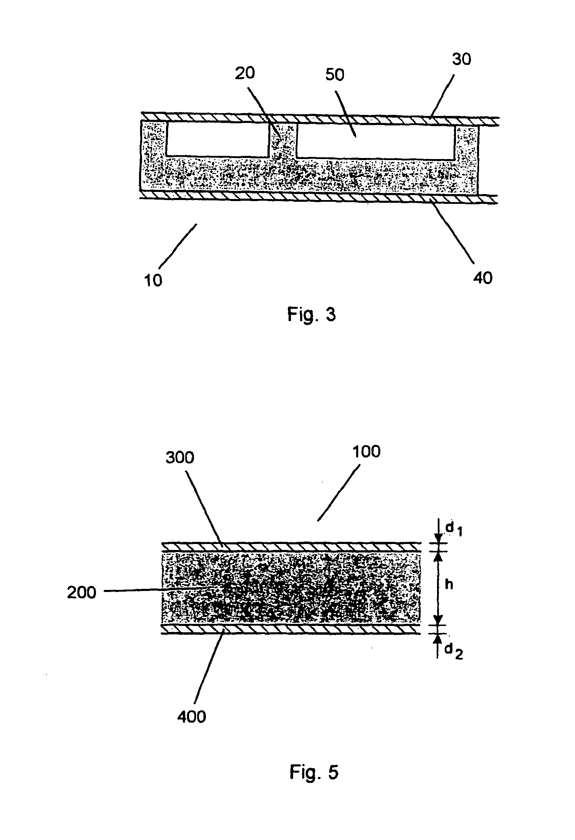

Der Aufbau einer Sandwichplatte ist beispielhaft in Fig. 5 dargestellt. Die Sandwichplatte 100 umfasst eine dreischichtige Verbundkonstruktion mit Deckschichten 300, 400 der Dicke $d_1$ und $d_2$ sowie einem Stützkern 200 der Höhe h. Als Deckschicht an Ober- 300 bzw. Unterseite 400 des Stützkerns 200 wird beispielsweise ein faserverstärktes Verbundmaterial verwendet. Den Stützkern 200 bildet eine Wabe aus in Phenolharz getränktem Papier, die in ihrem Aussehen einer Bienenwabe ähnelt. Zukünftig ist vermehrt von einem Einsatz von Schäumen, beispielsweise aus Phenolharz, als Kernmaterial auszugehen.

Ein wesentlicher Vorteil von Sandwichplatten ist ihre sehr hohe Biegesteifigkeit bei niedrigem Gewicht. In einer Sandwichplatte werden Zug- und Druckspannungen überwiegend durch die Deckschichten übertragen, während der Kern die aus einer Verformung der Gesamtstruktur normal zur Plattenoberfläche resultierenden Schubspannungen überträgt.

Gegenüber homogen aufgebauten Werkstoffen mit identischem oder vergleichbarem Flächengewicht sind die akustischen Eigenschaften von Sandwichplatten bezüglich Schalltransmissionen und Schallabstrahlung jedoch schlecht. So liegt das mit Sandwichplatten zu erreichende Schalldämmmaß oberhalb der Koinzidenzgrenzfrequenz deutlich unter dem Wert, der für homogene Materialien aus dem Massegesetz resultiert. Im Gegensatz zu homogenen Wandaufbauten bildet sich bei Sandwichplatten im Bereich der Koinzidenzgrenzfrequenz ein Einbruch des Schalldämmmaßes in Form eines breitbandigen Plateaus aus. Ursache für dieses Verhalten ist die Schubsteifigkeit des Kerns, die in diesem Frequenzbereich die Ausbreitungsgeschwindigkeiten der Transversalwellen innerhalb der Sandwichplatte dominiert.

Eine Möglichkeit zur Verbesserung des Schalldämmmaßes von Sandwichplatten ist deshalb, die Ausbreitungsgeschwindigkeit der Transversalwellen durch Verringerung der Schubsteifigkeit des Kerns unterhalb der Luftschallgeschwindigkeit zu halten.

So ist aus DE 100 34 990 A1 und EP 1 382 439 A3 bekannt, die Schubsteifigkeit des Kerns einer Sandwichplatte beispielsweise durch Schlitzung zu verringern. Dadurch wird der Verlauf des Schalldämmmaßes verbessert und die Schallabstrahlung der Sandwichplatte verringert.

Eine andere Möglichkeit zur Minderung des negativen Einflusses des Koinzidenzeffekts auf das Schalldämmmaß besteht in der Erhöhung der Körperschalldämpfung von Sandwichplatten.

Aus EP 1 061 190 A1 ist eine Sandwichplatte mit beidseitig eines Kerns angeordneten Deckschichten bekannt. Der Kern selbst besteht dabei aus mindestens zwei Kernschichten, von denen die beiden äußersten jeweils mit einer Deckschicht verbunden sind. Die Kernschichten sind mittels Distanzelementen voneinander beabstandet. Diese Sandwichplatte stellt für den Bereich der Bauakustik eine Verbesserung in der Schalldämmung gegenüber Einfachwänden dar, sowie einen vereinfachten konstruktiven Aufbau gegenüber konventionellen Doppelwänden, wie etwa von Gipskarton-Mineralfaserwolle-Gipskarton-Wänden. Die Auslegung der voneinander beabstandet angeordneten Kernschichten erfolgt dabei ausschließlich nach statischen Gesichtspunkten. Konstruktive Gegebenheiten und akustischen Eigenschaften der Sandwichplatte werden in EP 1 061 190 A1 nicht berücksichtigt. Möglichkeiten zur Vermeidung der Doppelwandresonanzfrequenz von Doppelwänden werden nicht vorgeschlagen.

Aus Feng, L. "A modified honeycomb panel to increase sound transmission loss"; Tenth international Congress on Sound and Vibration, Stockholm 2003; S. 4549-4554, ist bekannt, das Schalldämmmaß von Sandwichplatten in Aluminiumbauweise zu erhöhen, indem die Verklebung zwischen Aluminiumdeckschicht und Kern lokal gelöst wird. Dadurch verhält sich die Sandwichplatte im Bereich der Koinzidenzgrenzfrequenz sowie im Bereich der Doppelwandresonanz akustisch annähernd wie eine Wand aus einem homogenen Werkstoff nach dem Massegesetz. Nachteilig hieran ist, dass eine nur partielle Verklebung der Deckschichten mit dem Kern einer Sandwichplatte für den Einsatz im Flugzeugbau ungeeignet ist. Bei der Herstellung muss in den nicht zu verklebenden Bereichen eine zusätzliche Trennfolie eingebracht werden, die nach der Herstellung nicht entfernt werden kann und somit zu einer Gewichtserhöhung der Sandwichplatte führt. In den nicht verklebten Bereichen kommt es zu einem Klappern von Kern, Trennfolie und Deckschicht, was zu einer Beschädigung der einzelnen Komponenten führt und somit die Lebensdauer der Sandwichplatte mindert.

DE-AS 14 22 020 und DE-AS 11 91 597 offenbaren eine Sandwichstruktur, umfassend einen Kern sowie beidseitig des Kerns angeordnete Deckschichten, wobei der Kern regelmäßig angeordnete Kernaussparungen aufweist.

Technische Aufgabe der Erfindung

Der Erfindung liegt daher die Aufgabe zugrunde, eine Sandwichstruktur mit verbessertem Schalldämmmaß zu entwickeln.

Vorteile der Erfindung

Die Aufgabe wird durch eine Sandwichstruktur nach Anspruch 1 gelöst, wobei der Kern vorzugsweise direkt unter einer oder unter beiden Deckschichten angeordnete Kernaussparungen aufweist, welche so bemessen sind, dass das akustische Verhalten der Sandwichstruktur im Bereich der Kernaussparungen lokal dem akustischen Verhalten einer Doppelwand entspricht, und gleichzeitig das globale akustische Verhalten der Sandwichstruktur erhalten bleibt. Durch entsprechende Dimensionierung und Anordnung der Kernaussparungen entspricht das akustische Verhalten der erfindungsgemäßen Sandwichstruktur im hochfrequenten Bereich dem einer Doppelwand, und im tieffrequenten Bereich dem einer konventionellen Sandwichplatte. Um dieses akustische Verhalten zu erreichen sind die zwischen den Deckschichten in dem Kern angeordneten Kernaussparungen einerseits groß genug, damit das akustische Verhalten der Sandwichstruktur im Bereich der Kernaussparungen lokal dem akustischen Verhalten einer Doppelwand entspricht, und andererseits klein genug, damit das globale akustische Verhalten der Sandwichstruktur erhalten bleibt. Der Kern kann dabei aus einer Wabenstruktur bestehen, aus welcher die Kernaussparungen ausgeschnitten sind. Ebenso ist denkbar, dass der Kern aus einem ausgehärteten Schaum, beispielsweise aus einem aufgeschäumten Kunstharz besteht, aus dem die Kernaussparungen ausgeschnitten sind, oder bei dessen Herstellung diese beim Aufschäumen ausgespart wurden. Durch die Kernaussparungen entstehen Bereiche, in denen die Deckschichten durch die Wabenstruktur oder den Schaum des Kerns gestützt sind, sowie Bereiche, in denen die Deckschichten nicht oder nur wenig gestützt sind. Die Sandwichstruktur kann beispielsweise eine Sandwichplatte sein.

Die erfindungsgemäße Sandwichstruktur weist gegenüber dem Stand der Technik den Vorteil auf, dass sie sich im Bereich der Koinzidenzgrenzfrequenz einer konventionell aufgebauten Sandwichplatte mit identischen Abmessungen, sowie oberhalb der Koinzidenzgrenzfrequenz akustisch wie eine Doppelwand, und nicht wie eine konventionelle Sandwichplatte verhält. Unterhalb der Koinzidenzgrenzfrequenz verhält sich die erfindungsgemäße Sandwichstruktur wie eine konventionelle Sandwichplatte. Ein weiterer Vorteil der erfindungsgemäßen Sandwichstruktur ist eine aus der partiellen Kernentfernung resultierende Gewichtsreduktion gegenüber konventionellen Sandwichplatten. Ein positiver Nebeneffekt ist die durch die Kernaussparungen bedingte Verringerung der Schubsteifigkeit des Kerns, verbunden mit den oben beschriebenen positiven Auswirkungen auf das Schalldämmmaß.

Eine vorteilhafte Ausgestaltung der Erfindung sieht vor, dass die Kernaussparungen so ausgebildet sind, dass mindestens eine Deckschicht Bereiche aufweist, welche nicht durch den Kern gestützt sind. Dabei können die Kernaussparungen so ausgebildet sein, dass der Kern partiell vollständig, oder nur über einen Teil seiner Höhe entfernt ist, so dass Bereiche entstehen, in denen beide Deckschichten nicht durch den Kern gestützt sind, oder Bereiche, in denen nur eine Deckschicht nicht durch den Kern gestützt ist. Vorzugsweise liegt die erste Eigenfrequenz der im Bereich der Kernaussparungen nicht durch den Kern gestützten Deckschichtbereiche unterhalb der Koinzidenzgrenzfrequenz einer Sandwichstruktur gleicher Abmessungen ohne Kernaussparungen, und oberhalb der Doppelwandresonanz der Deckschichten. Darüber hinaus sind die Eigenfrequenzen benachbarter, nicht durch den Kern gestützter Deckschichtbereiche vorzugsweise verschieden. Um Interferenzen zwischen benachbarten Kernaussparungsbereichen zu vermeiden, entspricht das Verhältnis der Eigenfrequenzen benachbarter Kernaussparungsbereiche einer Priemzahl.

Eine andere vorteilhafte Ausgestaltung der Erfindung sieht vor, dass mindestens eine Deckschicht im Bereich benachbarter Kernaussparungen unterschiedliche Dicken aufweist. Durch die unterschiedlichen Dicken der Deckschicht im Bereich benachbarter Kernaussparungen werden unterschiedliche Eigenfrequenzen der im Bereich der Kernaussparungen nicht durch den Kern gestützten Deckschichtbereiche erreicht.

Eine zusätzliche, vorteilhafte Ausgestaltung der Erfindung sieht vor, dass die auf gegenüberliegenden Seiten des Kerns angeordneten Deckschichten unterschiedliche Dicken aufweisen. Durch die Ausführung der auf den gegenüberliegenden Seiten des Kerns angeordneten Deckschichten mit unterschiedlichen Dicken kann die Doppelwandresonanz beeinflusst werden. Durch eine geeignete Wahl der Dicken der Deckschichten kann die Doppelwandresonanz auf eine gewünschte Frequenz eingestellt werden. Dies ist ebenso dadurch erreichbar, dass die auf gegenüberliegenden Seiten des Kerns angeordneten Deckschichten aus unterschiedlichen Materialien bestehen.

Gemäß einer weiteren vorteilhaften Ausgestaltung der Erfindung ist vorgesehen, dass benachbarte Kernaussparungen unterschiedliche Geometrien aufweisen. Alternativ oder zusätzlich können benachbarte Kernaussparungen unterschiedliche Abmessungen aufweisen. Die Kernaussparungen weisen in der Draufsicht vorzugsweise einfach herzustellende Geometrien mit beispielsweise rechteckigem, quadratischem, kreisförmigem oder dreieckigem Querschnitt auf. Dabei können sich die Kernaussparungen über die gesamte Höhe des Kerns erstrecken, oder sie können nur einen Teil der Höhe des Kerns einnehmen. Grundsätzlich ist auch denkbar, dass die Kernaussparungen so angeordnet sind, dass beide Deckschichten Bereiche aufweisen, in denen sie nicht durch den Kern gestützt sind, wobei beispielsweise im Bereich der Mitte der Höhe der Kern durchgehend erhalten bleibt. Vorzugsweise ist der Kern durch die Kernaussparungen zumindest unter einer Deckschicht zu einem Kerngitter reduziert. Erstrecken sich die Kernaussparungen über die gesamte Höhe des Kerns, so umfasst das Kerngitter die Deckschichten miteinander verbindende Stege. Der Kern kann bei allen Ausführungsformen aus einer Wabenstruktur hergestellt sein, aus der die Kernaussparungen ausgeschnitten sind. Ebenso ist denkbar, dass der Kern aus einem aufgeschäumten Werkstoff hergestellt ist.

Weitere vorteilhafte Ausgestaltungen der Erfindung ergeben sich aus einer Kombination der abhängigen Ansprüche sowie aus der nachfolgenden Beschreibung des Ausführungsbeispiels.

Kurzbeschreibung der Zeichnungen:

In den Figuren zeigen:

Figur 1    eine schematische Darstellung des Aufbaus einer er- findungsgemäßen Sandwichstruktur im Querschnitt,

Figur 2    eine schematische Darstellung verschiedener Geomet- rien von Kernaussparungen in der Draufsicht,

Figur 3    eine schematische Darstellung des Aufbaus einer er- findungsgemäßen Sandwichstruktur im Querschnitt mit nur unter einer Deckschicht angeordneten Kernaus- sparungen,

Figur 4    eine Darstellung des Verlaufs des Schalldämmmaßes einer erfindungsgemäßen Sandwichstruktur, einer Doppelwand sowie einer konventionellen Sandwich- platte mit gleichen Abmessungen und gleichem Flächengewicht, sowie

Figur 5    eine schematische Darstellung des Aufbaus einer dem Stand der Technik entsprechenden, konventionellen Sandwichplatte im Querschnitt.

Detaillierte Ausführungsform der Erfindung

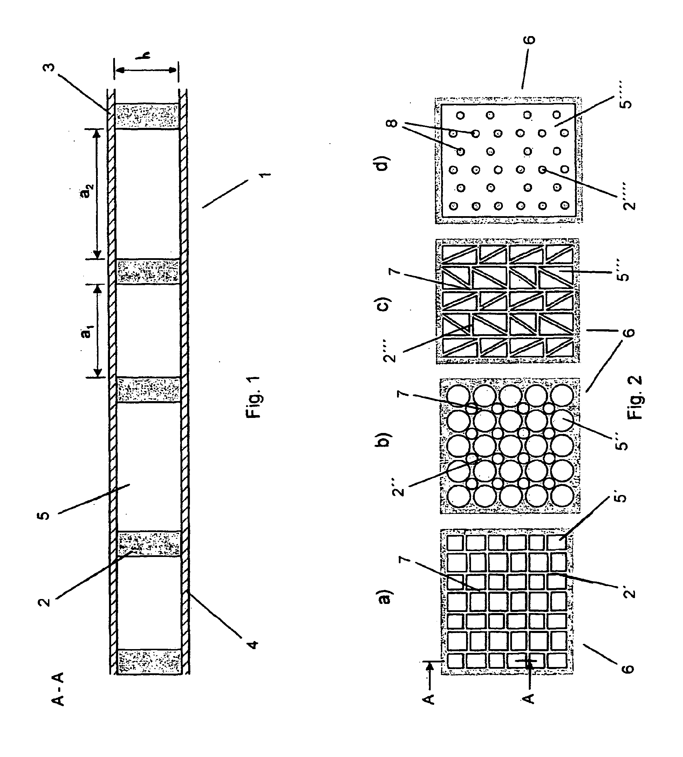

Eine in Fig. 1 dargestellte Sandwichstruktur 1 besteht im Wesentlichen aus einem Kern 2, zwei beidseitig des Kerns 2 angeordnete Deckschichten 3, 4, sowie in dem Kern 2 angeordnete, die gesamte Höhe h des Kerns 2 einnehmende Kernaussparungen 5. Im Bereich der Kernaussparungen 5 sind die Deckschichten 3, 4 nicht durch den Kern 2 gestützt. Je nach Betrachtungsweise werden diese Bereiche auch als Kernaussparungsbereiche oder Deckschichtbereiche, in denen die Deckschicht 3, 4 nicht durch den Kern 2 gestützt ist, bezeichnet. Die Abmessungen $a_1$, $a_2$ der Kernaussparungen 5 sind dabei einerseits groß genug bemessen, damit das akustische Verhalten der Sandwichstruktur 1 im Bereich der Kernaussparungen 5 lokal dem akustischen Verhalten einer Doppelwand entspricht, und andererseits klein genug bemessen, damit das globale akustische Verhalten der Sandwichstruktur 1 erhalten bleibt. Der Kern 2 besteht dabei aus einer Wabenstruktur, aus welcher die Kernaussparungen 5 ausgeschnitten sind. Grundsätzlich ist auch denkbar, dass der Kern 2 aus einem ausgehärteten Schaum, beispielsweise aus einem aufgeschäumten Kunstharz hergestellt ist. Fig. 1 zeigt dabei einen Querschnitt entlang der Linie A-A durch den in Fig. 2a) in der Draufsicht dargestellten Kern 2' einer Sandwichstruktur 1, bei dem die Kernaussparungen 5' eine rechteckige Geometrie aufweisen. Die Abmessungen $a_1$, $a_2$ benachbarter Kernaussparungen 5 gleicher Geometrie unterscheiden sich dabei voneinander, um Interferenzen zwischen den Eigenfrequenzen der nicht durch den Kern 2 gestützten Bereiche der Deckschichten 3, 4 zu vermeiden.

Bei den in Fig. 2 dargestellten Sandwichstrukturen 1', 1'', 1''', 1'''' nehmen die Kernaussparungen 5', 5'', 5''', 5'''' wiederum die gesamte Höhe h des Kerns 2', 2'', 2''', 2'''' ein, so dass nur ein für verschiedene Geometrien der Kernaussparungen 5', 5'', 5''', 5'''' prinzipiell gezeigtes, aus die Deckschichten miteinander verbindenden Stegen 7 bestehendes Kerngitter 6 stehen bleibt. So weisen die Kernaussparungen 5' in Fig. 2a) in der Draufsicht eine rechteckige Geometrie auf. In Fig. 2b) weisen die Kernaussparungen 5'' eine kreisförmige Geometrie auf. Kreisförmige Kernaussparungen 5'' sind dabei besonders leicht aus dem Kern 2'' auszuschneiden, beispielsweise mittels einer Lochsäge. In Fig. 2b) weisen diagonal benachbarte Kernaussparungen 5'' unterschiedliche Abmessungen auf. In Fig. 2c) ist ein Kern 2''' mit dreieckigen Kernaussparungen 5''' dargestellt. Benachbarte, dreieckige Kernausschnitte 5''' sind dabei in unterschiedliche Richtungen angeordnet, weisen unterschiedliche Abmessungen auf, oder beides. In Fig. 2d) sind die im Kern 2'''' angeordneten Kernaussparungen 5'''' so bemessen, dass nur noch das Kerngitter 6 bildende, die Deckschichten miteinander verbindende Säulen 8 von dem Kern 2'''' übrig sind. Die Säulen 8 sind dabei vorzugsweise unregelmäßig angeordnet, um Interferenzen zwischen den Eigenfrequenzen der nicht durch den Kern 2'''' gestützten Bereiche der Deckschichten zu vermeiden.

Bei der in Fig. 3 dargestellten Sandwichstruktur 10 nehmen die Kernaussparungen 50 nur einen Teil der Höhe h des Kerns 20 ein, so dass der Kern 20 nur unter einer Deckschicht 30 partiell entfernt ist. Dadurch weist die eine Deckschicht 30 Bereiche auf, welche nicht durch den Kern 20 gestützt werden, wohingegen die andere Deckschicht 40 vollständig durch den Kern 20 gestützt wird. Grundsätzlich sind dabei für die Kernaussparungen 50 die selben Geometrien, wie in Fig. 2 dargestellt denkbar.

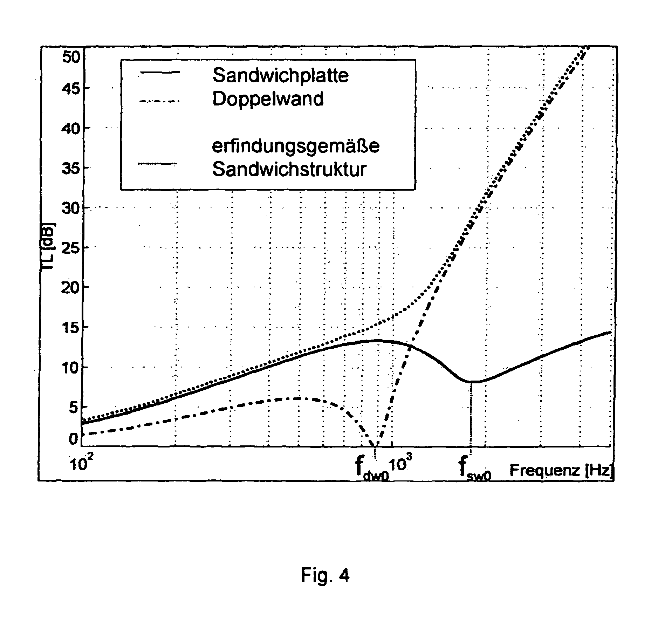

Das in Fig. 4 dargestellte Diagramm zeigt den Verlauf des Schalldämmmaßes TL über der Frequenz für eine erfindungsgemäße Sandwichstruktur, eine Doppelwand sowie eine konventionelle Sandwichplatte. Dabei weisen die erfindungsgemäße Sandwichstruktur, die Doppelwand und die konventionelle Sandwichplatte gleiche Abmessungen in Bezug auf den Abstand der Deckschichten voneinander, sowie gleiches Flächengewicht auf. Durch die geeignet bemessenen Kernaussparungen entsteht ein frequenzabhängiges Verhalten des Schalldämmmaßes TL der erfindungsgemäßen Sandwichstruktur, das sowohl dem einer Sandwichplatte oder einer Einfachwand, als auch dem einer Doppelwand entspricht. Im tieffrequenten Bereich entspricht das Verhalten weitgehend dem der konventionellen Sandwichplatte oder Einzelwand. Im hochfrequenten Bereich entspricht das Verhalten dem der Doppelwand. Durch die Kernaussparungen wird das akustische Verhalten der Sandwichstruktur derartig beeinflusst, dass das aus dem Stand der Technik bekannte Verhalten der Ausbreitungsgeschwindigkeit der Transversalwellen über der Frequenz ausgeschlossen wird. Dadurch wird bei der erfindungsgemäßen Sandwichstruktur die Koinzidenz der Transversalwellen mit der umgebenden Luft völlig vermieden, ebenso wie die Ausbildung eines plateauartigen Koinzidenzeinbruchs des Schalldämmmaßes TL.

Um das vorgestellte und in Fig. 4 gezeigte, frequenzselektive Doppelwandverhalten der erfindungsgemäßen Sandwichstruktur und somit den Ausschluss der Koinzidenz der konventionellen (d.h. keine Kernaussparungen aufweisenden) Sandwichplatte zu erreichen, ist für das Design der Kernaussparung die Kenntnis der Koinzidenzgrenzfrequenz $f_{sw0}$ einer vergleichbaren konventionellen Sandwichplatte mit identischen Abmessungen und Materialien für die Deckschichten und den Stützkern notwendig.

Die Abmessungen der Kernaussparungen, wie beispielsweise die Abmessungen $a_1$ bzw. $a_2$ nach Fig. 1, sind anschließend so zu wählen, dass unterhalb der Koinzidenzgrenzfrequenz $f_{sw0}$ die nicht durch den Kern gestützten Deckschichtbereiche ihre erste Eigenfrequenz $f_{e1}$ aufweisen. In diesem Fall wirkt die erfindungsgemäße Sandwichstruktur nicht mehr global als Gesamtstruktur, sondern lokal als Doppelwand. Andererseits sind die Aussparungen so klein gewählt, dass im Bereich der Doppelwandresonanz $f_{dw0}$ noch das globale Verhalten einer konventionellen Sandwichplatte vorliegt und hier keine Verschlechterung des Schalldämmmaßes auftritt. Dies bedeutet, dass die erste Eigenfrequenz $f_{e1}$ der freien Deckschichtbereiche oberhalb der Doppelwandresonanz $f_{dw0}$ liegen muss. Insgesamt muss also gelten

$$f_{dw0} \quad < \quad f_{e1} \quad < \quad f_{sw0}.$$

Dadurch können für die erfindungsgemäße Sandwichstruktur im tieffrequenten Bereich die positiven akustischen Eigenschaften der Sandwichplatte beibehalten werden. Hochfrequent verhält sich die erfindungsgemäße Sandwichstruktur akustisch wie eine Doppelwand (Fig. 4).

Zusammenfassend wird so eine Erhöhung des Schalldämmmaßes bei gleichzeitiger Gewichtsreduktion erreicht.

Es wird besonders hervorgehoben, dass die Koinzidenzgrenzfrequenzen der für sich allein betrachteten, einzelnen Deckschichten für die typischerweise im Flugzeugbau verwendeten Materialien deutlich oberhalb des für den Akustikkomfort relevanten Frequenzbereichs liegen. Ein Auftreten von unerwünschten Hohlraumresonanzen in den Kernaussparungsbereichen, in denen die Deckschicht nicht durch den Kern gestützt ist, ist ebenfalls erst oberhalb des für den Akustikkomfort relevanten Frequenzbereichs zu erwarten. Ferner wirkt das Kerngitter beziehungsweise der zwischen den Deckschichten verbleibende Kern wie eine Kassettierung eines Doppelwandhohlraums. Dies wirkt sich ebenfalls positiv auf das Schalldämmmaß aus. Zu vermeiden ist eine Abstimmung der nicht durch den Kern gestützten Bereiche der Deckschichten auf die gleiche Eigenfrequenz. In diesem Falle würde bei der entsprechenden Frequenz die Gesamtstruktur wie eine aus einzelnen Strahlern zusammengesetzte Platte wirken. Die Aussparungen sollten deshalb unterschiedliche Geometrien und/oder Abmessungen aufweisen. Alternativ oder zusätzlich dazu können unterschiedliche Deckschichtdicken und -materialien gewählt werden. Auch eine in Fig. 3 dargestellte, partielle Entfernung des Kerns unter nur einer Deckschicht führt zu den gewünschten unterschiedlichen Deckschichteigenschaften.

Die Umsetzung der Erfindung in die Serienfertigung ist leicht möglich, da lediglich die entsprechenden Bereiche des Kerns vor dem Zusammenfügen von Kern und Deckschichten entfernt werden müssen. Der weitere Fertigungsablauf wird nicht beeinträchtigt. Da keine neuen oder zusätzlichen Materialien benötigt werden, ist diesbezüglich auch keine Zulassung seitens der zuständigen Stellen erforderlich.

Gewerbliche Anwendbarkeit

Die Erfindung ist insbesondere, aber nicht ausschließlich, im Bereich der Herstellung von Sandwichstrukturen zur Verwendung im Flugzeugbau gewerblich anwendbar.

Bezugszahlenliste

| 1 | Sandwichstruktur |
|---|---|
| 2, 2', 2'', 2''', 2'''' | Kern |
| 3 | Deckschicht |
| 4 | Deckschicht |
| 5, 5', 5'', 5''', 5'''' | Kernaussparung |
| 6 | Kerngitter |
| 7 | Steg |
| 8 | Säule |

| 10 | Sandwichstruktur |
|---|---|
| 20 | Kern |
| 30 | Deckschicht |
| 40 | Deckschicht |
| 50 | Kernaussparung |

| 100 | Sandwichplatte |
|---|---|
| 200 | Stützkern |
| 300 | Deckschicht |
| 400 | Deckschicht |

| d | Dicke der Deckschicht |
|---|---|
| h | Höhe des Kerns |

| $a_1$ | Abmessung einer Kernaussparung |
|---|---|
| $a_2$ | Abmessung einer Kernaussparung |

**Patentansprüche**

1. Sandwichstruktur (1, 10), umfassend einen Kern (2, 20) sowie beidseitig des Kerns (2, 20) angeordnete Deckschichten (3, 4, 30, 40), wobei der Kern (2, 20) Kernaussparungen (5, 50) aufweist, welche so bemessen sind, dass das akustische Verhalten der Sandwichstruktur (1, 10) im Bereich der Kernaussparungen (5, 50) dem akustischen Verhalten einer Doppelwand entspricht, und gleichzeitig das globale akustische Verhalten der Sandwichstruktur (1, 10) erhalten bleibt, und welche so bemessen sind, dass das akustische Verhalten der Sandwichstruktur (1, 10) im tieffrequenten Bereich dem einer entsprechenden Sandwichstruktur gleicher Abmessungen ohne Kernaussparungen und im hochfrequenten Bereich dem einer Doppelwand entspricht, wobei die Eigenfrequenzen benachbarter, nicht durch den Kern (2, 20) gestützter Deckschichtbereiche verschieden sind; und wobei das Verhältnis der Eigenfrequenzen benachbarter Kernaussparungsbereiche einer Priemzahl entspricht, um Interferenzen zwischen benachbarten Kernaussparungsbereichen zu vermeiden.

2. Sandwichstruktur nach Anspruch 1, wobei die Kernaussparungen (5, 50) so ausgebildet sind, dass mindestens eine Deckschicht (3, 4, 30) Bereiche aufweist, welche nicht durch den Kern (2, 20) gestützt sind.

3. Sandwichstruktur nach Anspruch 1 oder 2, wobei die erste Eigenfrequenz der im Bereich der Kernaussparungen (5, 50) nicht durch den Kern (2, 20) gestützten Deckschichtbereiche unterhalb der Koinzidenzgrenzfrequenz einer Sandwichstruktur (100) gleicher Abmessungen ohne Kernaussparungen (5, 50), und oberhalb der Doppelwandresonanz der Deckschichten (3, 4) liegt.

4. Sandwichstruktur nach einem der vorhergehenden Ansprüche, wobei mindestens eine Deckschicht (3, 4, 30) im Bereich benachbarter Kernaussparungen (5, 50) unterschiedliche Dicken (d) aufweist.

5. Sandwichstruktur nach einem der vorhergehenden Ansprüche, wobei die auf gegenüberliegenden Seiten des Kerns (2, 20) angeordneten Deckschichten (3, 4, 30, 40) unterschiedliche Dicken (d) aufweisen.

6. Sandwichstruktur nach einem der vorhergehenden Ansprüche, wobei die auf gegenüberliegenden Seiten des Kerns (2, 20) angeordneten Deckschichten (3, 4, 30, 40) aus unterschiedlichen Materialien bestehen.

7. Sandwichstruktur nach einem der vorhergehenden Ansprüche, wobei durch die Kernaussparungen (50) der Kern (20) nur unter einer Deckschicht (30) partiell entfernt ist, so dass die eine Deckschicht (30) Bereiche aufweist, welche nicht durch den Kern (20) gestützt werden, und die andere Deckschicht (40) vollständig durch den Kern (20) gestützt wird.

8. Sandwichstruktur nach einem der vorhergehenden Ansprüche, wobei der Kern (2, 20) aus einer Wabenstruktur hergestellt ist.

9. Sandwichstruktur nach einem der Ansprüche 1 bis 7, wobei der Kern (2, 20) aus einem aufgeschäumten Werkstoff hergestellt ist.

10. Sandwichstruktur nach einem der vorhergehenden Ansprüche, wobei benachbarte Kernaussparungen (5', 5'', 5''', 5'''') unterschiedliche Geometrien aufweisen.

11. Sandwichstruktur nach einem der vorhergehenden Ansprüche, wobei benachbarte Kernaussparungen (5, 50) unterschiedliche Abmessungen aufweisen.

12. Sandwichstruktur nach einem der vorhergehenden Ansprüche, wobei die Kernaussparungen (5') einen rechteckigen oder quadratischen Querschnitt aufweisen.

13. Sandwichstruktur nach einem der Ansprüche 1 bis 11, wobei die Kernaussparungen (5'') einen kreisförmigen Querschnitt aufweisen.

14. Sandwichstruktur nach einem der Ansprüche 1 bis 11, wobei die Kernaussparungen (5''') einen dreieckigen Querschnitt aufweisen.

15. Sandwichstruktur nach einem der vorhergehenden Ansprüche, wobei die Kernaussparungen (50) nur einen Teil der Höhe (h) des Kerns (20) einnehmen.

16. Sandwichstruktur nach einem der vorhergehenden Ansprüche, wobei der Kern (2, 20) mindestens unter einer Deckschicht (3, 4, 30, 40) zu einem Kerngitter (6) reduziert ist.

17. Sandwichstruktur nach Anspruch 16, wobei das Kerngitter (6) die Deckschichten (3, 4) miteinander verbindende Stege (7, 8) umfasst.

**Claims**

1. Sandwich structure (1, 10) comprising a core (2, 20), as well as on both sides of the core (2, 20) disposed cover layers (3, 4, 30, 40), wherein the core (2, 20) has core recesses (5, 50) which are dimensioned in such a manner that the acoustic behavior of the sandwich structure (1, 10) in the area of the core recesses (5, 50) corresponds to the acoustic behavior of a double wall while at the same time maintaining the global acoustic behavior of the sandwich structure (1, 10) and which are dimensioned in such a manner that in the low frequency area the acoustic behavior of the sandwich structure (1, 10) corresponds to a sandwich structure with same dimensions without core recesses and in the high frequency area it corresponds to a double wall, wherein the own frequencies of adjacent, not by the core (2, 20) supported cover layer areas are different; and wherein the ratio of the own frequencies of adjacent core recess areas corresponds to a prime number, to prevent interferences between adjacent core recesses.

2. Sandwich structure after claim 1,
   **wherein**

the core recesses (5, 50) are constructed in such a manner that at least one cover layer (3, 4, 30) has areas which are not supported by the core (2, 20).

3. Sandwich structure after claim 1 or 2,
   **wherein**
   the first own frequency lies, in the area of the core recesses (5, 50), not by the core (2, 20) supported cover layer areas, below the coincidence border frequency of a sandwich structure (100) same dimensions without core recesses (5, 50) and above the double wall resonance of the cover layers (3, 4)

4. Sandwich structure after one of the preceding claims,
   **wherein**
   at least one cover layer (3, 4, 30) in the area of adjacent core recesses (5, 50) has different thickness (d).

5. Sandwich structure after one of the preceding claims,
   **wherein**
   on opposite sides of the core (2, 20) disposed cover layers (3, 4, 30, 40) have different thickness (d).

6. Sandwich structure after one of the preceding claims,
   **wherein**
   on opposite sides of the core (2, 20) disposed cover layers (3, 4, 30, 40) exist of different materials.

7. Sandwich structure after one of the preceding claims,
   **wherein**
   the core recesses (50) of the core (20) are removed only partially under a cover layer (30) so that one cover layer (30) has areas which are not supported by the core (20) and the other cover layer (40) is completely supported by the core (20).

8. Sandwich structure after one of the preceding claims,
   **wherein**
   the core (2, 20) is made of a honeycomb structure.

9. Sandwich structure after one of the claims 1 to 7,
   **wherein**
   the core (2, 20) is made of a foam material.

10. Sandwich structure after one of the preceding claims,
    **wherein**
    adjacent core recesses (5', 5", 5''', 5'''') have different geometries.

11. Sandwich structure after one of the preceding claims,
    **wherein**
    adjacent core recesses (5, 50) have different dimensions.

12. Sandwich structure after one of the preceding claims,
    **wherein**
    the core recesses (5') have a rectangular or square cross section.

13. Sandwich structure after one of the claims 1 to 11,
    **wherein**
    the core recesses (5") have a circular cross section.

14. Sandwich structure after one of the claims 1 to 11,
    **wherein**
    the cores recesses (5''') have a triangular cross section.

15. Sandwich structure after one of the preceding claims,
    **wherein**
    the core recesses (50) take only a part of the high (h) of the core (20).

**16.** Sandwich structure after one of the preceding claims,
**wherein**
the core (2, 20) is at least under one cover layer (3, 4, 30, 40) reduced to a core grid (6).

**17.** Sandwich structure after claim 16,
**wherein,**
the core grid (6) comprises connecting bars (7, 8) which connect the cover layers (3, 4) with each other.


**Revendications**

**1.** Structure en sandwich (1, 10), comprenant un noyau (2, 20) ainsi que des couches de couverture (3, 4, 30, 40) agencées des deux côtés du noyau (2, 20), le noyau (2, 20) comportant des évidements de noyau (5, 50) qui sont dimensionnés de telle sorte que le comportement acoustique de la structure en sandwich (1, 10) dans la zone des évidements de noyau (5, 50) correspond au comportement acoustique d'une double paroi et que simultanément le comportement acoustique global de la structure en sandwich (1, 10) est conservé et qui sont dimensionnés de telle sorte que le comportement acoustique de la structure en sandwich (1, 10) correspond dans la plage des basses fréquences à celui d'une structure en sandwich correspondante de mêmes dimensions sans évidements de noyau et dans la plage des hautes fréquences à celui d'une double paroi, les fréquences propres de zones de couche de couverture voisines non soutenues par le noyau (2, 20) étant différentes ; et le rapport des fréquences propres de zones d'évidement de noyau voisines correspondant à un nombre premier pour éviter des interférences entre des zones d'évidement de noyau voisines.

**2.** Structure en sandwich selon la revendication 1, dans laquelle les évidements de noyau (5, 50) sont conçus de telle sorte qu'au moins une couche de couverture (3, 4, 30) comporte des zones qui ne sont pas soutenues par le noyau (2, 20).

**3.** Structure en sandwich selon la revendication 1 ou 2, dans laquelle la première fréquence propre des zones de couche de couverture non soutenues par le noyau (2, 20) dans la zone des évidements de noyau (5, 50) est inférieure à la fréquence limite de coïncidence d'une structure en sandwich (100) de mêmes dimensions sans évidements de noyau (5, 50) et supérieure à la résonance de double paroi des couches de couverture (3, 4).

**4.** Structure en sandwich selon l'une des revendications précédentes, dans laquelle au moins une couche de couverture (3, 4, 30) a dans la zone d'évidements de noyau voisins (5, 50) des épaisseurs (d) différentes.

**5.** Structure en sandwich selon l'une des revendications précédentes, dans laquelle les couches de couvertures (3, 4, 30, 40) agencées sur des côtés opposés du noyau (2, 20) ont des épaisseurs (d) différentes.

**6.** Structure en sandwich selon l'une des revendications précédentes, dans laquelle les couches de couvertures (3, 4, 30, 40) agencées sur des côtés opposés du noyau (2, 20) sont constituées de matériaux différents.

**7.** Structure en sandwich selon l'une des revendications précédentes, dans laquelle, par les évidements de noyau (50), le noyau (20) est enlevé partiellement seulement sous une couche de couverture (30) de telle sorte que la couche de couverture (30) comporte des zones qui ne sont pas soutenues par le noyau (20) et l'autre couche de couverture (40) est complètement soutenue par le noyau (20).

**8.** Structure en sandwich selon l'une des revendications précédentes, dans laquelle le noyau (2, 20) est fabriqué à partir d'une structure en nid d'abeilles.

**9.** Structure en sandwich selon l'une des revendications 1 à 7, dans laquelle le noyau (2, 20) est fabriqué à partir d'un matériau en mousse.

**10.** Structure en sandwich selon l'une des revendications précédentes, dans laquelle des évidements de noyau voisins (5', 5", 5''', 5'''') ont des géométries différentes.

**11.** Structure en sandwich selon l'une des revendications précédentes, dans laquelle des évidements de noyau voisins (5, 50) ont des dimensions différentes.

**12.** Structure en sandwich selon l'une des revendications précédentes, dans laquelle les évidements de noyau (5') ont une section transversale rectangulaire ou carrée.

**13.** Structure en sandwich selon l'une des revendications 1 à 11, dans laquelle les évidements de noyau (5") ont une section transversale circulaire.

**14.** Structure en sandwich selon l'une des revendications 1 à 11, dans laquelle les évidements de noyau (5"') ont une section transversale triangulaire.

**15.** Structure en sandwich selon l'une des revendications précédentes, dans laquelle les évidements de noyau (50) prennent seulement une partie de la hauteur (h) du noyau (20).

**16.** Structure en sandwich selon l'une des revendications précédentes, dans laquelle le noyau (2, 20) est réduit, au moins sous une couche de couverture (3, 4, 30, 40), à une grille de noyau (6).

**17.** Structure en sandwich selon la revendication 16, dans laquelle la grille de noyau (6) comprend des traverses (7, 8) reliant entre elles les couches de couverture (3, 4).

A - A

2        5                                                3

a₁          a₂

h

4                    Fig. 1                                  1

EP 1 886 301 B1

a)              b)        2‴  c)        d)        8

7          2″      7                  7

A

A

6        2′    5′      5″      6      5‴      2⁗      5⁗

6          Fig. 2

Fig. 3

Fig. 5

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10034990 A1
- EP 1382439 A3
- EP 1061190 A1

- DE AS1422020 B
- DE AS1191597 B

**In der Beschreibung aufgeführte Nicht-Patentliteratur**

- **FENG, L.** A modified honeycomb panel to increase sound transmission loss. *Tenth international Congress on Sound and Vibration,* 2003, 4549-4554